Europäisches Patentamt

(19) European Patent Office

Office européen des brevets

(11) Publication number: **0 079 907**
**B1**

## (12) EUROPEAN PATENT SPECIFICATION

(45) Date of publication of patent specification: **11.12.85**

(21) Application number: **82901527.0**

(22) Date of filing: **28.05.82**

(86) International application number:
**PCT/GB82/00158**

(87) International publication number:
**WO 82/04292 09.12.82 Gazette 82/29**

(51) Int. Cl.⁴: **B 26 B 15/00, B 23 D 29/00, F 15 B 9/10**

(54) Shearing tool.

(30) Priority: **28.05.81 GB 8116321**

(43) Date of publication of application:
**01.06.83 Bulletin 83/22**

(45) Publication of the grant of the patent:
**11.12.85 Bulletin 85/50**

(84) Designated Contracting States:
**BE CH DE FR GB LI SE**

(56) References cited:
**DE-A-1 550 320**
**GB-A- 543 247**
**US-A-4 109 381**

(73) Proprietor: **PRUTEC LIMITED**
**142 Holborn Bars**
**London EC1N 2NH (GB)**

(72) Inventor: **ARCHER, John Richard**
**78 Chapel Lane**
**Fowlmere, Royston Hertfordshire (GB)**

(74) Representative: **Messulam, Alec Moses**
**A. Messulam & Co. 24 Broadway**
**Leigh on Sea Essex SS9 1BN (GB)**

Courier Press, Leamington Spa, England.

## Description

This invention relates to a shearing tool incorporating a semi-rotary fluid actuator, which term as used herein means a fluid operated actuator capable of translating a manually powered mechanical control into fluid powered semi-rotary motion (i.e. rotation through less than a full circle).

The shearing tool of the invention may be, for example, scissors, tin snips or bolt cutters. In such a device, the actuator serves to translate a manual control applied to the handle into an hydraulically powered slave motion of the shearing blades.

In a conventional non-powered shearing tool, shearing forces of such high magnitude can be required that the necessary mechanical advantage has to be obtained by the provision of long handles, thus making the tool unwieldy, tiring to operate and difficult to control.

In US—A—4 109 381, there is disclosed a shearing tool having a reference handle rigidly connected to a reference blade and a slave blade articulated on the reference blade by means of an axle. A hydromechanical actuator provided for operating the slave blade is fed with fluid from a distributing valve which has a valve member operated by a control handle.

In the above shearing tool, which is intended to be used as secateurs, the blades are either fully open or fully closed, depending on the position of the control handle relative to the reference handle and it is not possible to achieve smooth continuous control over the movement of the slave blade.

The present invention aims to mitigate the above problems encountered in the prior art.

In accordance with the present invention, there is provided a shearing tool having a reference handle, a reference blade rigidly connected to the reference handle, and a slave blade articulated on the reference blade by means of an axle, and a hydromechanical actuator for operating the slave blade and fed with fluid from a distributing valve having a valve member operated by a control handle, characterised in that the control handle and the slave blade are mounted at a common pivot assembly to the junction of the reference handle and reference blade, and the hydromechanical actuator is a semi-rotary actuator incorporated in said pivot assembly, said actuator comprising a housing to which the reference handle and blade are rigidly connected. a bushing rotatable within the housing and to which the slave blade is rigidly connected, the bushing having a vane which partitions an arcuate hydraulic chamber formed between the housing and said bushing, and a spool rotatable within the bushing and to which the control handle is rigidly connected, said spool having supply and return cavities for hydraulic fluid which by manual operation of the handles are placed in communication with the arcuate chamber through ports in the bushing, thereby to develop a differential driving torque on the vane to cause the blades to perform a powered shearing action.

It should be mentioned that hydromechanical actuators of the oscillating-vane type with follow up action are known per se and are described in DE—A—1 550 320 and in GB—A—543 247.

The invention will now be described further, by way of example, with reference to the accompanying drawings, in which:—

Figure 1 shows a shearing tool in side elevation;

Figure 2 is a partly cross-sectioned plan view of the operating head of the tool; and

Figure 3 is an axial cross-section through the pivot assembly of the tool.

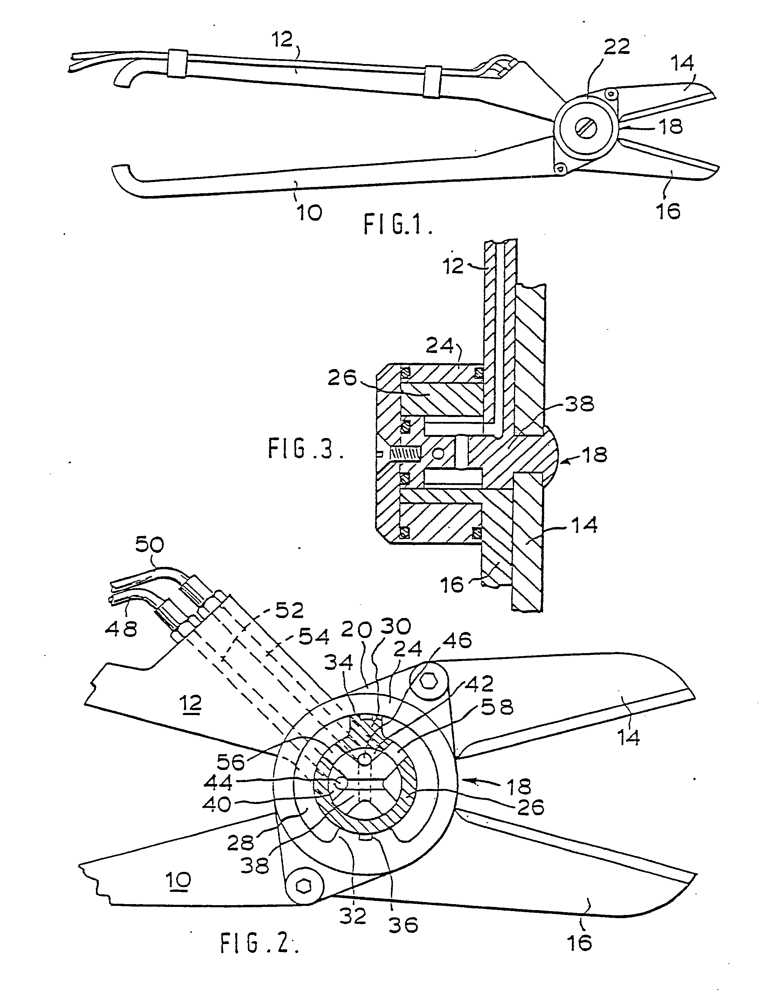

The shearing tool shown in the drawings has a pair of handles and a pair of shearing blades. The handles comprise a reference handle 10 and a control handle 12, and the blades comprise a reference blade 14 and a driven blade 16. The reference handle 10 and reference blade 14 are integrally interconnected in the region of a pivot assembly 18 by means of a section 20. The control handle 12 and the driven blade 16 can turn about the axis of the pivot assembly 18. The pivot assembly 18 incorporates a hydromechanical semi-rotary actuator 22 (see Figure 1) of the invention.

The actuator 22 comprises a circular housing 24 rigid with the reference handle and reference blade assembly 10, 14, 20. Rotatable in the housing 24 is a vaned bushing 26, to which the driven blade 16 is rigidly connected. An arcuate chamber 28 is defined between the bushing 26 and the housing 24, and has a radial vane 30 which subdivides the chamber 28. The bushing 26 bears against the interior of the housing 24 at the outer end of said vane, and also at an inward rib 32 on the housing which separates the ends of the arcuate chamber 28. Seals, designated 34 and 36, respectively, are provided at each bearing region.

Within the vaned bushing 26, a spool 38 is rotatable against the inner surface of the bushing 26. The control handle 12 is rigidly connected to the spool 38. The spool 38 is an element with four broad, equi-angularly spaced, axial grooves in its surface, diametrically opposite grooves being interconnected by cross bores.

The pairs of interconnected grooves constitute cavities which are referenced 40 and 42. Hydraulic fluid is supplied to the cavity 40 through a port 44 and hydraulic fluid can exit from the cavity 42 through a port 46. The ports 44, 46 communicate with hydraulic fluid supply and return lines 48, 50 through passages 52, 54 bored in the control handle 12.

It will be clear that, in use, when the handles 10, 12 are operated, e.g. by squeezing the control handle 12 towards the reference handle 10, the spool 38 is rotated within the bushing 26.

To the sides of the vane 30 which partitions the hydraulic chamber 28, the bushing 26 has through ports 56, 58. When the spool 38 is rotated, the hydraulic fluid supply and return cavities 40, 42 communicate through the respective ports 56, 58 in the bushing with the hydraulic chamber 28, on respective opposite sides of the vane 30. A differential driving torque is thereby developed across the vane 30, causing the bushing 26 to rotate. The driven blade 16 is thereby rotated relative to the reference blade 14. This motion continues until the bushing ports 56, 58 are closed due to said rotation of the bushing 26. More generally, therefore, the driven blade 16 constitutes a slave which is hydraulically driven in response to a manually operated master constituted by the control blade 12.

The invention thus provides an arrangement of shearing tool in which the shearing blades are fluid powered whilst manual positional control is retained by the handles. Manual effort is not required to provide the full force necessary to effect the shearing action, and the user can therefore concentrate on control. Clearly, elongated handles to generate a substantial mechanical advantage are no longer required, and the bulk, weight and unwieldyness of the tool can thereby be minimised. Furthermore, rapid or prolonged operation of the tool can be achieved without fatigue.

Various modifications of the above-described arrangement are possible within the scope of the invention as set forth in the claim, especially in relation to the manner in which the hydraulic chamber is formed to apply a rotational torque to the bushing.

## Claim

A shearing tool having a reference handle (10), a reference blade (14) rigidly connected to the reference handle (10), and a slave blade (16) articulated on the reference blade (14) by means of an axle, and a hydromechanical actuator for operating the slave blade (16) and fed with fluid from a distributing valve having a valve member operated by a control handle, characterised in that the control handle (12) and the slave blade (16) are mounted at a common pivot assembly to the junction of the reference handle (10) and reference blade (14), and the hydromechanical actuator is a semi-rotary actuator incorporated in said pivot assembly, said actuator comprising a housing (24) to which the reference handle (10) and blade (14) are rigidly connected, a bushing (26) rotatable within the housing (24) and to which the slave blade (16) is rigidly connected, the bushing (26) having a vane (30) which partitions an arcuate hydraulic chamber (28) formed between the housing (24) and said bushing (26), and a spool (38) rotatable within the bushing (26) and to which the control handle (12) is rigidly connected, said spool (38) having supply and return cavities (40, 42) for hydraulic fluid which by manual operation of the handles (10, 12) are placed in communication with the arcuate chamber (28) through ports (56, 58) in the bushing (26), thereby to develop a differential driving torque on the vane (30) to cause the blades (14, 16) to perform a powered shearing action.

## Patentanspruch

Ein Scherwerkzeug mit einem Hauptgriff (10), einer starr mit dem Hauptgriff (10) verbundenen Hauptklinge (14), einer über eine Achse mit der Hauptklinge (14) drehbar verbundenen Zweitklinge (16) und einem zur Betätigung der Zweitklinge (16) vorgesehenen hydromechanischen Betätigungselement, das mit Flüssigkeit aus einem Verteilerventil mit einem über einen Steuergriff betätigten Ventilteil beaufschlagt wird, dadurch gekennzeichnet, daß der Steuergriff (12) und die Zweitklinge (16) an einer gemeinsamen Drehvorrichtung am Verbindungsstück des Hauptgriffs (10) und der Hauptklinge (14) befestigt sind; und daß das hydromechanische Betätigungselement ein in der genannten Drehvorrichtung untergebrachtes, halbkreisförmig drehbares Betätigungselement ist, wobei das genannte Betätigungselement ein Gehäuse (24) umfaßt, mit dem der Hauptgriff (10) und die Klinge (14) starr verbunden sind, sowie eine innerhalb des Gehäuses (24) drehbare Hülse (26), mit der die Zweitklinge (16) starr verbunden ist, wobei die Hülse (26) eine Schaufel (30) besitzt, die als Unterteilung einer gewölbten Hydraulikkammer (28) zwischen dem Gehäuse (24) und der genannten Hülse (26) dient, sowie ein innerhalb der Hülse (26) drehbarer Spulenkörper (38), mit dem der Steuergriff (12) starr verbunden ist, wobei der genannte Spulenkörper (38) für die Zuführung und Abführung der Hydraulikflüssigkeit Hohlräume (40, 42) aufweist, die durch manuelle Betätigung der Griffe (10, 12) über Öffnungen (56, 58) in der Hülse (26) in Verbindung mit der gewölbten Kammer (28) gebracht werden, um dadurch ein differenziertes Antriebsdrehmoment auf dei Schaufel (30) auszuüben, damit die Klingen (14, 16) eine kraftbetriebene Scherbewegung durchführen.

## Revendication

Un outil à cisailler comportant une poignée de référence (10), une lame de référence (14) reliée de façon rigide à la poignée de référence (10), et une lame asservie (16) articulée sur la lame de référence (14) au moyen d'un axe, et un vérin hydromécanique pour actionner la lame asservie (16) et alimenté en fluide par une vanne distributrice ayant un élément de vanne actionné par une poignée de commande, caractérisé en ce que la poignée de commande (12) et la lame asservie (16) sont montées sur un ensemble de pivot commun, à la jonction de la poignée de référence (10) et de la lame de référence (14), et le vérin hydromécanique est un vérin semirotatif incorporé dans le dit ensemble de pivot, le dit vérin comprenant un boîtier (24) auquel la poignée de référence (10) et la lame de référence (14) sont reliées de façon rigide, une douille (26) pouvant tourner à l'intérieur du boîtier (24) et à laquelle la lame asservie (16) est reliée de façon rigide, la douille (26) portant une aube (30) qui partage une chambre hydraulique (28) en forme d'arc formée entre le boîtier (24) et la dite douille (26), et une bague (38) pouvant tourner à l'intérieur de la douille (26) et à laquelle la poignée de commande (12) est reliée de façon rigide, la dite bague (38) présentant des cavités (40, 42) d'alimentation et de retour du fluide hydraulique qui, par une commande manuelle des poignées (10, 12) sont mises en communication avec la chambre (28) en forme d'arc à travers des orifices (56, 58) ménagés dans la douille (26), développant ainsi un couple moteur différentiel sur l'aube (30) pour amener les lames (14, 16) à effectuer une action de cisaillement commandée.

FIG.1.

FIG.3.

FIG.2.